# EUROPEAN PATENT APPLICATION

(11) **EP 4 174 475 A1**
(43) Date of publication of application: **03.05.2023**
(21) Application number: 21382985.6
(22) Date of filing: 02.11.2021
(51) Int. Cl.: G01N 21/65

(54) **METHOD FOR THE TRANSFORMATION AND ANALYSIS OF ELECTROMAGNETIC SPECTRA**

(71) Applicant: Universitat Rovira I Virgili, 43003 Tarragona (ES); Leibniz-Institut für Polymerforschung Dresden e.V., 01069 Dresden (DE)
(72) Inventor: Baulin, Vladimir, 43007 Tarragona (ES); Werner, Marco, 01307 Dresden (DE)
(74) Representative: Isern Patentes y Marcas S.L.

(57) **Abstract**

The present invention relates to a method for the transformation and analysis of electromagnetic spectra of a sample, and in particular for a method for the transformation of a bidimensional matrix of spectra into a multispectral image of the sample with enhanced resolution along the whole frequency range.

## Description

### OBJECT OF THE INVENTION

The present invention relates to a method for the transformation and analysis of electromagnetic spectra of a sample, and in particular for a method for the transformation of a bidimensional matrix of spectra into a multispectral image of the sample with enhanced resolution along the whole frequency range.

### BACKGROUND OF THE INVENTION

Spectroscopy is a powerful research tool with application in a wide range of fields, from astronomy to medicine. One of its fastest developing techniques is the surface-enhanced Raman spectroscopy or surface-enhanced Raman scattering (SERS), which is a very sensitive method for the detection of microorganisms that exploits the ability of metal nanoparticles and surfaces to enhance Raman scattering of specific molecules at the membrane of bacteria or tissue cells, or fungi.

In a typical implementation, a biological sample, for example, organic tissue substrate with bacteria, is stained with metallic nanoparticles with a known SERS signature or fingerprint signal, such as silver or gold nanoparticles; each type of bacteria accumulates antibody functionalized SERS-labelled metallic nanoparticles. Hence, the nanoparticles are selectively aggregated on the membranes of the bacteria, rendering dense arrays of inter-particle gaps in which the Raman signal is exponentially amplified by several orders of magnitude relative to the dispersed particles. This enables a multiplex identification of the microorganisms through the molecule-specific spectral fingerprints (Pazos-Perez et al., 2016).

For example, SERS active uncoated gold nanoparticles have been successfully used to discriminate three bacterial strains, namely, Gram-negative E. coli and Gram-positive LGG and B. subtilis (Akanny et al., "Surface-enhanced Raman spectroscopy using uncoated gold nanoparticles for bacteria discrimination". J. Raman Spectroscopy. 2020, 51).

Owing to the sheer amount of information that needs to be processed, it has been proposed the use of machine learning algorithms to optimise the process, for instance, implementing a support-vector machine algorithm to develop a classification model splitting leukemic and healthy lymphocytes (Happilllon et al., "Label free technologies: Raman microspectroscopy and multi-spectral imaging for lymphocyte classification". Proceedings of the 11th European Congress on Telepathology and 5th International Congress on Virtual Microscopy. 2012).

However, it has been noted that the strength of the SERS signal is not consistent throughout the frequency range, resulting in a reduced resolution of specific frequency bands; for less critical applications this might not be a significant problem, but in those cases where the SERS signal identifies a unique metallic particle, the lack of resolution may overshadow important information for the analysis. Whereas manual adjustment of each spectrum measure, or alternative methods are able to increase the resolution of a weaker frequency band, they are either unfeasible by hand or require costly and specific equipment.

Current methods and technologies fail to provide an adequate solution for this issue, and therefore there is a demand for a method capable of overcoming the problems of the prior art in a cost-efficient and effective manner.

### DESCRIPTION OF THE INVENTION

The present invention solves the above-mentioned problems by means of a method for the transformation and analysis of electromagnetic spectra of a sample, and in particular for a method for the transformation of a bidimensional matrix of spectra into a multispectral image of the sample with enhanced resolution along the whole frequency range.

In a first inventive aspect, the invention provides a *computer implemented method for the transformation and analysis of electromagnetic spectra of a sample, wherein each point spectrum Sᵢⱼ of a plurality of m × n spectra of the sample comprising a spectral signal is related to a spatial coordinate (i, j) of a matrix of m × n pixels of the sample, the method comprising, by the computer, the steps of:*
*dividing the spectral signal of each point spectrum Sᵢⱼ into N blocks according to N bands of frequency of the signal,*
*adjusting the frequency ranges of the bands according to N weighing values w, wherein each weighing value wₖ is computed according to the strength of the spectral signal of at least a frequency band Bₖ,*
*arranging, for each frequency band Bₖ, the m × n blocks of the band Bₖ according to their related spatial coordinates (i, j) to assemble N spectral maps of m × n pixels, wherein each spectral map Mₖ corresponds to a frequency band Bₖ,*
*assigning a different channel k to each band Bₖ, and superposing the N spectral maps according to the related spatial coordinates (i, j) of their point spectra, thus obtaining a multispectral image of the sample.*

The present method accomplishes the transformation of a set of point spectra of a sample into a bidimensional (2D) multispectral image with an enhanced resolution by setting higher probability weights (numerical amplification) to those frequency bands with a lower signal strength and expanding their frequency ranges. This is particularly advantageous to obtain and analyse multispectral images of samples which spectral signals show distinctive traits on weaker frequency bands, and to separate them from the higher amplitude peaks corresponding to the signals from the nanoparticles themselves, substrate, and impurities, without obscuring or distorting the rest of the frequency range. The transformation is achieved by adjusting the frequency ranges of each band Bₖ of a plurality of frequency bands in which the spectral signal is divided, with a weighting value wₖ, preferably in such a way that the strength of the frequency ranges with a weaker signal is increased, and vice versa. Alternatively, the weighting values w may be set to adjust the signal in a different way, such as a process wherein a non-characteristic part of the spectra can be separated in a different channel or even skipped.

After obtaining a collection of point spectra, Sᵢⱼ, one for each pixel of a field of view of m × n pixels of the sample, the process comprises the steps of dividing the spectral signal of the point spectra Sᵢⱼ into a given number of blocks according to the frequency of the signal; the frequency ranges of each block may be even or not, since these ranges will be adjusted according to the strength of the signal by means of weighing values, w; for example, in a spectral signal with a maximum peak of ∼150·10³ counts in a frequency band B₁ centred around 500 nm, with an initial width of 10 nm, and a band B₂ centred around 600 nm, with an initial width of 10 nm, where B₂ encompasses a peak with a relatively weaker intensity of ∼25·10³ counts, the width of B₂ will be multiplied by a weighing value w₂ = 0,95, the width of B₁ will be multiplied by a weighing value w₁ = 1,05, and the centres of the rest of bands B₃ - B_{N} will be shifted accordingly, their widths remaining unchanged. In other embodiments, the ranges of more than two frequency bands are adjusted simultaneously; in a particular embodiment, all N frequency bands are adjusted simultaneously with the help of an algorithm configured to maximize one or more frequency bands of interest.

Once the adjustment of the frequency bands is accomplished, the blocks of each band Bₖ are arranged in a *x-y* plane according to the coordinates of the m × n matrix, (i, j), thus forming a spectral map for each frequency band Bₖ, N spectral maps in total. Each frequency band Bₖ is assigned a channel k, such that the intensity of the spectral signal of each block is represented by a level of intensity of the channel k, for example, an intensity value of the channel proportional to the mean of the spectral signal intensity of the block, or an intensity value proportional to the peak value of the spectral signal intensity. In a preferred embodiment, the intensity value is expressed in terms of percentage, and the maximum intensity value of the map is represented by a 100% intensity, while the minimum is represented by a 0% intensity; in other embodiments, the maximum is represented by a 95%, and the minimum by a 5%. In another embodiment, the intensity value is expressed as a value from 0 to 1.

The N maps are then aligned according to the spatial coordinates (i, j) of the m × n matrix, and then superposed, or stacked, according to the frequency bands. The result is a multispectral image of the sample, that is, a bidimensional representation of the spectral information of the field of view, wherein each colour represents a frequency band, and the intensity of the channels represent the intensity or strength of the signal in the corresponding spectral bands; in this way, the multispectral image is a composition of all the channels, in the same fashion as RGB or CMYK images are obtained by the superposition of only three or four channels, respectively. Thus, the division into frequency band may not be uniform.

The above-mentioned steps are described as being performed as physical operations for ease of understanding, but the skilled person would know that the computer processes the data according to computation processes, without necessarily depicting the intermediate structures to a human observer.

Throughout the present document, point spectrum should be understood as the spectral signal of a pixel of a field of view, wherein the field of view is the field of view of a conventional spectral measuring instrument showing a sample of interest; the field of view may be regarded as a matrix of m × n pixels which is swept by the measuring instrument obtaining a spectral signal for each of the m × n pixels, the point spectra Sᵢⱼ; each point spectrum Sᵢⱼ is related to the coordinate (i, j) of the m × n matrix of the pixel which produces the signal, and it is preferably stored in storing means of the computer which executes the method. By pixel should be understood a square unit after the division of space in square lattice sites of the visible surface according to a given spatial resolution.

The computer tasked with executing the method may be a conventional computer receiving data comprising the spectral signal from the measuring instrument, or may be integrated in the measuring instrument itself; in further embodiments, the computer may be a distributed computing system, comprising several interconnected computer units, performing partial or concurring processes related to the claimed method.

By block, or spectral block, should be understood a portion of the spectral signal of a pixel comprised within the range of a frequency band, or in other words, each of the fragments resulting from dividing the point spectrum into frequency bands. By channel should be understood a numerical value associated to each block and/or pixel which advantageously makes possible the depiction of the spectral signal of a given frequency range; a channel is analogous to the colour channels in a RGB colour image, whereas instead of only three channels, the present method makes use of an arbitrary number N of channels. In a preferred embodiment, the channel is represented by a range of numerical values from minimum to maximum of the selected spectral band value, which enable the depiction of the spectral signal; in yet another embodiment, the channel is implemented as an intensity value between 0 and 1, or a value between 0% and 100%, or a value between 0 and 255; preferably, the colour of each pixel of the multispectral image is defined by a vector of N discrete values {a₁, a₂, ..., a_{N}}, each value referring to the intensity of a corresponding channel. In a preferred embodiment, the intensity of the channel is the intensity of a greyscale, wherein the lowest intensity corresponds to black, and the highest intensity corresponds to white. By a spectral map corresponding to a given channel should be understood a 2D array of spatially arranged pixels; wherein each pixel has an intensity value from 0% to 100%, such that each map is effectively a greyscale image of the sample. Also, the term frequency should be considered interchangeable and equivalent to wavelength, the relation between these magnitudes being apparent to any skilled in the art.

In a particular embodiment, *each point spectrum Sᵢⱼ comprises a subsequent spectral signal concatenated to the previous spectral signal, wherein the bands of the subsequent spectral signal are assigned an additional set of channels to the previous spectral signal channel set.*

A subsequent spectral signal should be understood to be a spectral signal, different from the previous spectral signal as defined above; the difference may reside, for example, in the wavelength range of the spectrum, or the need of a different sensor to acquire the spectra. The subsequent spectral signal is concatenated or added to the previous spectral signal, and then the spectra are processed as described above, using a different channel set from the previous spectral signals. Further subsequent spectral signals may be added to one or more previous spectral signals as z-stacks.

In a particular embodiment, *the method further comprises the steps of:*
*feeding the multispectral image to an artificial neural network algorithm configured to identify particular species of the sample, and*
*identifying particular species of the sample in the multispectral image.*

The multispectral image obtained from the transformation process may reveal features of the sample which can be used to identify particular species, such as a certain type of tissue or bacterium. The multispectral image may be advantageously analysed by means of artificial intelligence algorithms, in particular in a preferred embodiment of the method the multispectral image is analysed by means of an artificial neural network algorithm trained to identify one or more species. In a preferred embodiment, the multispectral image is fed to a relatively simple neural network with about one to three hidden layers, which can be quickly trained.

In a particular embodiment, *the method further comprises the step of training the artificial neural network algorithm using labelled spectral maps and high-resolution optical or electron microscopy images of the sample as a ground truth to identify the spatial coordinates (i, j).*

The step of training the algorithm entails the use of previously obtained examples of spectral maps showing certain species as labelled data for those species; alternatively, labelled multispectral images may be used to train the neural network algorithm. Also, microscopy images, either optical or electron, of the sample are used as a reference or ground truth of the spatial coordinates of the field of view, advantageously setting a coordinate reference for the alignment of the blocks and spectral maps.

Preferably, the method makes use of optical microscope RGB images combined with co-aligned bidimensional multispectral images for training the artificial neural network, relating the spatial coordinates of species, such as single bacteria, bacteria with attached nanoparticles of different types, or individual nanoparticles, with their spectral signature, which is represented by a cluster of pixels. By spectral signature should be understood the combination of spectral and/or spatial features of one or more pixels of a spectral map or a multispectral image, which is distinctive of a particular species and indicates the presence of the species in the sample.

In a particular embodiment, *the method further comprises the step of providing optical images with the geometrical coordinates of the centres of specific species.*

Optical images from conventional microscopy can be obtained simultaneously while gathering the spectra, and provide both spatial information of the sample and a way to identify and label species. These optical images are then labelled and the centres of the species identified, such that the information can be used during the training phase of the method. In another embodiment, the method further comprises the step of providing electron microscopy images with the geometrical coordinates of the centres of specific species.

In a particular embodiment, *the spectra are surface enhanced Raman spectroscopy spectra, SERS.*

Advantageously, SERS spectroscopy shows a very high resolution and detects certain compounds such as silver nanoparticles which attach selectively to the membranes of bacteria.

In a particular embodiment, *the spectra are obtained from samples comprising biological material.*

Processing a sample with biological material, such as organic tissue or bacteria, as required by the method makes possible the detection of relevant species such as pathogens or cancer cells.

In a particular embodiment, *the spectral signals are obtained from SERS nanoparticles.*

In a particular embodiment, *the SERS nanoparticles are metal nanoparticles with strong SERS signal.*

Advantageously, the species can be discriminated from the background with labels such as nanoparticles, preferably metallic nanoparticles, which return a specific signal that can be easily identified.

In a particular embodiment, *the nanoparticles are gold nanoparticles.*

Advantageously, gold nanoparticles attach selectively to certain species; in other embodiments, the nanoparticles are silver particles.

In a particular embodiment, *the colours are assigned to each band Bₖ according to RGB colour coding.*

Advantageously, each pixel comprises a histogram of colours, where each band represents a 2D greyscale image with values from 0 to 1.

### DESCRIPTION OF THE DRAWINGS

The foregoing and other advantages and features will be more fully understood from the following detailed description of exemplary embodiments with reference to the accompanying drawings, which should be considered by way of illustration and not limitation, in which:
- Figures 1a, 1b, 1c: These figures represent three flowcharts of three embodiments of the method.
- Figure 2: This figure represents a schematic depiction of a spectral signal and of several spectral maps.

### PREFERRED EMBODIMENT OF THE INVENTION

Throughout the present document it will be understood that various parts of one embodiment of the invention can be freely combined with parts described in other embodiments, even being said combination not explicitly described, provided there is no harm in such combination.

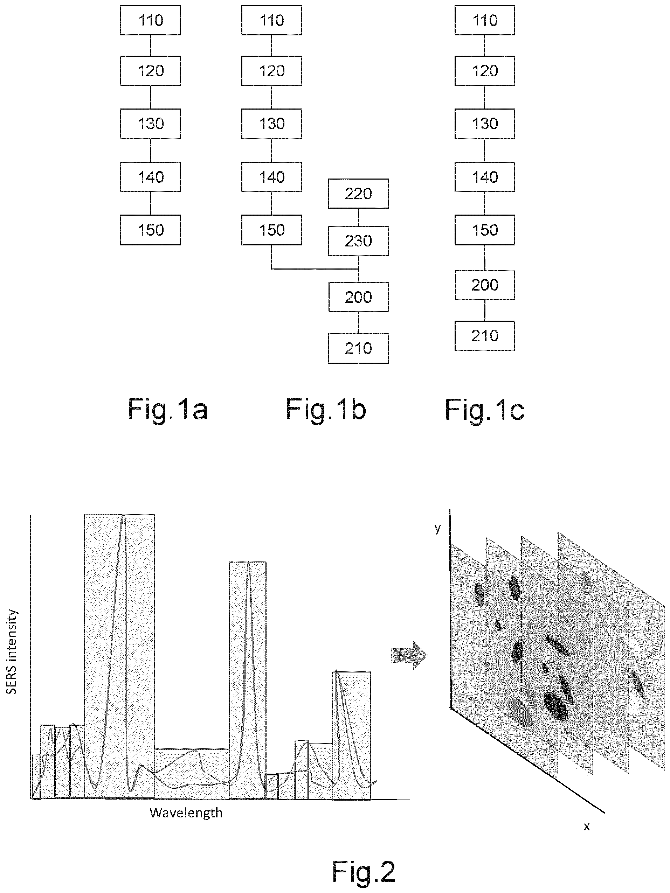

A preferred example of the invention is directed to a method for processing a collection of SERS spectra of a sample containing biological material. In this preferred embodiment, the sample is dyed with gold nanoparticles which selectively attach to certain molecules of biological tissue present in the sample; the nanoparticles should be adapted to the features of the target species, for example, if the species are bacteria, the nanoparticles should be smaller than bacteria, in such a way they can sense and sample the bacteria cell wall. The SERS spectra of the sample are obtained by means of a conventional SERS spectrometer sweeping over an effective field of view of 500 × 400 pixels of the sample; the spectrometer collects a spectral signal from each pixel of the 500 × 400 matrix, which is stored together with the coordinates (i, j) of the corresponding pixel as a spectrum Sᵢⱼ in a memory of the computer on which executes the method, altogether 200·10³ spectra. Figure 2, left part, shows an example of a spectral signal, represented as a plot of SERS intensity vs. wavelength.

Figure 1a shows a preferred implementation of the method, described hereunder. In a first step, upon receiving the spectra from the spectrometer, the computer divides (110) evenly the spectral signal of each spectrum Sᵢⱼ into 50 blocks of 10 nm bands in a range of from 200 nm to 700 nm centred around the middle of the range, with the first band B₁ extending from 200 nm to 210 nm, centred in 205 nm, the second band B₂ from 210 nm to 220 nm, centred in 215 nm, and so on; thus N = 50.

The ranges of the bands are then adjusted (120) according to the strength of the spectral signal by means of weighing values w₁-w₅₀, such that in a spectral signal with a maximum peak of ∼150·10³ counts in a band B₃ centred around 225 nm, with an initial width of 10 nm, and a band B₄ centred around 235 nm, with an initial width of 10 nm, where B₄ encompasses a peak with a relatively weaker intensity of ∼25·10³ counts, the width of B₄ will be multiplied by a weighing value w₄ = 0,95, and the width of B₃ will be multiplied by a weighing value w₃ = 1,05, and the centres of the rest of bands B₁ - B₂ and B₅ - B₅₀ will be shifted accordingly, their widths remaining unchanged.

The adjusting (120) step yields 10·10⁶ blocks which are subsequently grouped by the frequency bands and then arranged (130) according to their spatial coordinates (i, j), which gives 50 spectral maps of 500 × 400 pixels of the sample, each map Mₖ corresponding to a frequency band Bₖ. For example, the spectral map M₃ will show 500 × 400 pixels of the field of view of the sample, but only the part of the spectral signal corresponding to band B₃, ranging from 219,75 nm to 230,25 nm. Figure 2, right part, shows a simplified representation of four spectral maps aligned according to spatial coordinates, denoted by the axis *x, y.*

Each of the 50 frequency bands is assigned (140) a different value or primary colour out of the 50 channels; it should be noted that primary colour is used here to refer to the component of the channel, and it might not even be visible to the human eye. The different colour may be assigned according to the wavelength or attending to other parameters. In the present example, the whole spectrum is discretized into 50 bands or ranges, and each range adopts the colour corresponding with the mean wavelength value as the colour of the range. For example, in this embodiment, assuming the wavelengths range being from 380 nm to 750 nm, each spectral colour range will have a width of around 7,5 nm, and considering the assignation of colours in order of the frequency band Bₖ, the band B₃ will be assigned a spectral colour of ∼400 nm, which corresponds to a shade of violet. In other embodiments, other colour assignments are implemented, including the use of a greyscale.

Consequently, each spectral map Mₖ will be associated to the colour of the corresponding band Bₖ (e.g., M₃ will be associated with a violet of ∼ 400 nm), and the intensity of each colour of the pixel of the map will be related to the intensity of the signal of the corresponding block for that pixel, in the present example, proportional to the peak value of the intensity of the spectral signal in the block, or in other words, normalized from 0% to 100% according to the minimum and maximum intensity value of the spectral band Bₖ.

Finally, the 50 spectral maps are superposed (150) in stacks according to the z axis, and according to their frequency bands, and aligned in such a way that a pixel of coordinates (i, j) of a spectral map Mₖ is located immediately under the pixel (i, j) of the spectral map Mₖ₊₁. The result being a multispectral image of the sample, wherein the maximum and minimum intensity of each channel of the colour of the pixel represents the peak and the minimum values, respectively, of the signal in a certain frequency band.

In another example, a further or subsequent spectral signal is obtained by a corresponding sensor and concatenated or added to the previous SERS spectral signal; the resulting expanded spectrum comprises both a SERS spectral signal and another type of spectral information, such as infrared or ultraviolet spectra. The method is conducted following the same steps as described above, with the difference of the subsequent signal being assigned a different set of colours to avoid confusion with the spectral maps corresponding to the previous spectral signal.

In a preferred example, depicted by the flowcharts of Figures 1b and 1c, the method further comprises the analysis of the multispectral image by means of an artificial neural network, which in this example comprises three hidden layers.

The multispectral image resulting from the transformation is fed (200) to the artificial neural network, which identifies (210) a particular species. In order to successfully identify a species, the artificial neural network needs to be trained (220) first with labelled spectral maps and the use of previously provided (230) optical and electron microscopy images as a ground truth to achieve a correct alignment of the map.

In a preferred implementation, the training of the artificial neural network and the inference of the analysis of the multispectral image is conducted as follows:
a) Annotation: For the training it is required to label or annotate a multispectral image obtained as described above. This can be done with the help of the high-resolution image of an optical microscope co-aligned with the spectral map. An expert can recognize and identify the objects or species to distinguish in the 2D optical microscopy image. Then the labelling of the examples of each object as well as examples of the background provide (i) coordinates of the centre of these examples of each object and the background; (ii) the area occupied by the objects in the image. Since the optical microscope image is co-aligned with the multispectral image, the obtained coordinates designate the spectral signature of each object through the stack of all images of the multispectral image. The spectral signature is thus, characterized by the shape and area of each example of the object in the multispectral image.
b) Training: The neural network receives multispectral images of each example of the object and the background with the centres and the sizes of images identified in the previous step, such that each example of the object is represented by a multispectral image with the centre and the size identified during the annotation step. Each "object" and "background" is represented by multiple examples. Using standard back-forward propagation of the neural network, the link between the "object" and its representation in the multispectral image of different examples.
c) Inference: when a new multispectral image is presented to the trained neural network, the neural network can classify the image according to probabilities to find different objects. Then the algorithm indicates the centres of the objects with a given by the user confidence.
d) Post-analysis: The detected objects with their centres can be used for post-analysis and statistical analysis providing the number of objects, their spatial distribution, relative positions, correlation functions, moments of mass, surface densities, etc.

## Claims

1. Computer implemented method for the transformation and analysis of electromagnetic spectra of a sample, wherein each point spectrum Sᵢⱼ of a plurality of m × n spectra of the sample comprising a spectral signal is related to a spatial coordinate (i, j) of a matrix of m × n pixels of the sample, the method comprising, by the computer, the steps of:
dividing (110) the spectral signal of each point spectrum Sᵢⱼ into N blocks according to N bands of frequency of the signal,
adjusting (120) the frequency ranges of the bands according to N weighing values w, wherein each weighing value wₖ is computed according to the strength of the spectral signal of at least a frequency band Bₖ,
arranging (130), for each frequency band Bₖ, the m × n blocks of the band Bₖ according to their related spatial coordinates (i, j) to assemble N spectral maps of m × n pixels, wherein each spectral map Mₖ corresponds to a frequency band Bₖ,
assigning (140) a different channel k to each band Bₖ, and
superposing (150) the N spectral maps according to the related spatial coordinates (i, j) of their point spectra, thus obtaining a multispectral image of the sample.

2. Method according to the previous claim, wherein each point spectrum Sᵢⱼ comprises a subsequent spectral signal concatenated to the previous spectral signal, wherein the bands of the subsequent spectral signal are assigned an additional set of channels to the previous spectral signal channel set.

3. Method according to any of the previous claims, wherein the method further comprises the steps of:
feeding (200) the multispectral image to an artificial neural network algorithm configured to identify particular species of the sample, and
identifying (210) particular species of the sample in the multispectral image.

4. Method according to the previous claim, wherein the method further comprises the step of:
training (220) the artificial neural network algorithm using labelled spectral maps and
high-resolution optical or electron microscopy images of the sample as a ground truth to identify the spatial coordinates (i, j).

5. Method according to the previous claim, wherein the method further comprises the step of providing (230) optical images with the geometrical coordinates of the centres of specific species.

6. Method according to any of the previous claims, wherein the spectra are surface enhanced Raman spectroscopy spectra, SERS.

7. Method according to any of the previous claims, wherein the spectra are obtained from samples comprising biological material.

8. Method according to any of the previous claims 6-7, wherein the spectral signals are obtained from SERS nanoparticles.

9. Method according to the previous claim, wherein the SERS nanoparticles are metal nanoparticles with strong SERS signal.

10. Method according to any of the previous claims, wherein the colours are assigned to each band Bₖ according to RGB colour coding.
